# EUROPEAN PATENT APPLICATION

(11) **EP 2 005 831 A2**
(43) Date of publication of application: **24.12.2008**
(21) Application number: 08157930.2
(22) Date of filing: 10.06.2008
(51) Int. Cl.: A23B 4/056

(54) **Cooking and smoking apparatus**

(30) Priority: 13.06.2007 IT MO20070200
(71) Applicant: ANGELO PO GRANDI CUCINE S.p.A., 41012 Carpi (MO) (IT)
(72) Inventor: Bassoli, Claudio, 41012 Carpi (MO) (IT)
(74) Representative: Crugnola, Pietro

(57) **Abstract**

A cooking and smoking apparatus for cooking and smoking foodstuffs (2) comprises cooking chamber means (4) for containing said foodstuffs (2), heating means (9), positioned in said cooking chamber means (4), for heating said foodstuffs (2), smoking chamber means (21) for producing smoking smoke (15) for smoking said foodstuffs (2) and conduit means (41) for connecting said cooking chamber means (4) to said smoking chamber means (21).

## Description

The invention relates to a cooking and smoking apparatus for cooking and smoking foodstuffs.

Cooking and smoking apparatuses are known that comprise a cooking chamber for containing foodstuffs to be cooked and smoked on a plurality of shelves.

Such apparatuses further comprise a combustion and smoking chamber in which combustible elements are burnt, such as pieces of wood or coal, for producing hot air for cooking, and smoke for smoking, the aforesaid foodstuffs.

The combustion and smoking chamber communicates via an opening with an external environment and comprises a tilted loading plane provided with a first wall on which the combustible elements are positioned.

The tilted loading plane is further provided with a second wall, opposite the first wall, on which a vibrating device is fixed for vibrating, and conveying, the combustible elements to a source of heat arranged for achieving the aforesaid combustion.

Such apparatuses further comprise a connecting conduit for connecting the cooking chamber to the combustion and smoking chamber.

This connecting conduit defines a circulation path for the hot air and the smoking smoke from the combustion and smoking chamber to the cooking chamber.

In particular, the connecting conduit comprises a first portion, communicating with the combustion and smoking chamber, extending outside and laterally to the cooking chamber.

The connecting conduit further comprises a second portion communicating with, and extending outside and above, the cooking chamber.

Such apparatuses further comprise a fan, positioned inside the connecting conduit between the first portion and the second portion, to convey the hot air and the smoking smoke from the combustion chamber to the cooking chamber.

A drawback of known cooking and smoking apparatuses is that they are not very flexible, i.e. they do not enable cooking/smoking cycles to alternate with solely cooking cycles.

In fact, in such apparatuses, in any cooking cycle, both the hot air and the smoking smoke produced in the combustion and smoking chamber are introduced into the cooking chamber that cook and smoke the foodstuffs.

A further drawback of known apparatuses is that they have a particularly complex structure.

This is mainly due to the conformation of the connecting conduit and of the winding circulation path for the hot air and the smoking smoke defined by the connecting conduit between the combustion and smoking chamber and the cooking chamber.

Further, the significant length of the connecting conduit makes it necessary to position a plurality of heating elements inside the second portion of the connecting conduit to maintain at a desired temperature, or heat further, the hot air and the smoking smoke coming from the combustion and smoking chamber, so as to prevent the smoke, when it cools, being deposited inside the second portion before reaching the cooking chamber and thus the foodstuffs.

A still further drawback of known apparatuses is that they are particularly expensive.

This is essentially due to the costs to be borne to purchase the vibrating device and the heating elements.

Another drawback of known apparatuses is that they are particularly noisy.

This is due to the noise produced by the vibrating device, by the collisions between the combustion elements, the loading plane and the source of heat, and by the collisions between the combustion elements themselves.

An object of the invention is to improve the cooking and smoking apparatuses for cooking and smoking foodstuffs.

A further object is to make cooking and smoking apparatuses that are more flexible than known apparatuses.

A still further object is to provide cooking and smoking apparatuses having a simple structure and which require moderate disbursement of money to be made.

Another object is to make cooking and smoking apparatuses that are more silent than known apparatuses.

According to the invention a cooking and smoking apparatus is provided for cooking and smoking foodstuffs comprising cooking chamber means for containing said foodstuffs and heating means, positioned in said cooking chamber means, for heating said foodstuffs, characterised in that there is provided smoking chamber means for producing smoking smoke for smoking said foodstuffs and conduit means for connecting said cooking chamber means to said smoking chamber means.

Owing to this aspect of the invention it is possible to make particularly flexible cooking and smoking apparatuses, i.e. apparatuses that enable cooking/smoking cycles to alternate with solely cooking cycles.

In fact, in said apparatus, when it is desired to achieve a cooking/smoking cycle, both said heating means for heating said cooking chamber internally, and said smoking chamber communicating with an external environment via a suitable opening are activated by a suitable control and management unit to produce said smoking smoke.

In this manner, said smoking smoke produced by said smoking chamber means and the air sucked from said external environment through said opening are introduced together into said cooking chamber by suitable fan means positioned inside the cooking chamber.

Subsequently, both said air and said smoking smoke are heated in said cooking chamber means by said heating means and cook and smoke said foodstuffs.

On the other hand, when it is desired to achieve only one cooking cycle, i.e. only to cook said foodstuffs without smoking said foodstuffs, the control and management unit deactivates said smoking chamber means, which ceases to produce said smoke.

In this manner, said fan means sucks from said external environment, via said opening, only said air.

Subsequently, said air is heated in said cooking chamber means by said heating means and cooks said foodstuffs.

Further, said apparatus made according to the invention is particularly simple and cheap.

In fact, said conduit means defines a circulation path for said air and said smoking smoke that is substantially linear and not long.

This also enables the performance of said apparatus to be improved and makes the heating elements provided in known apparatuses superfluous, with consequent saving of money.

Moreover, in said apparatus the vibrating device that is included in known apparatuses is not provided, which on the one hand enables a further quantity of money to be saved and on the other hand enables a particularly silent apparatus to be obtained.

The invention can be better understood and implemented with reference to the enclosed drawings that illustrate an embodiment thereof by way of non-limiting example, in which:
Figure 1 is a schematic view of a cooking and smoking apparatus in a first operating condition;
Figure 2 is a schematic view of the apparatus in Figure 1 in a second operating condition.

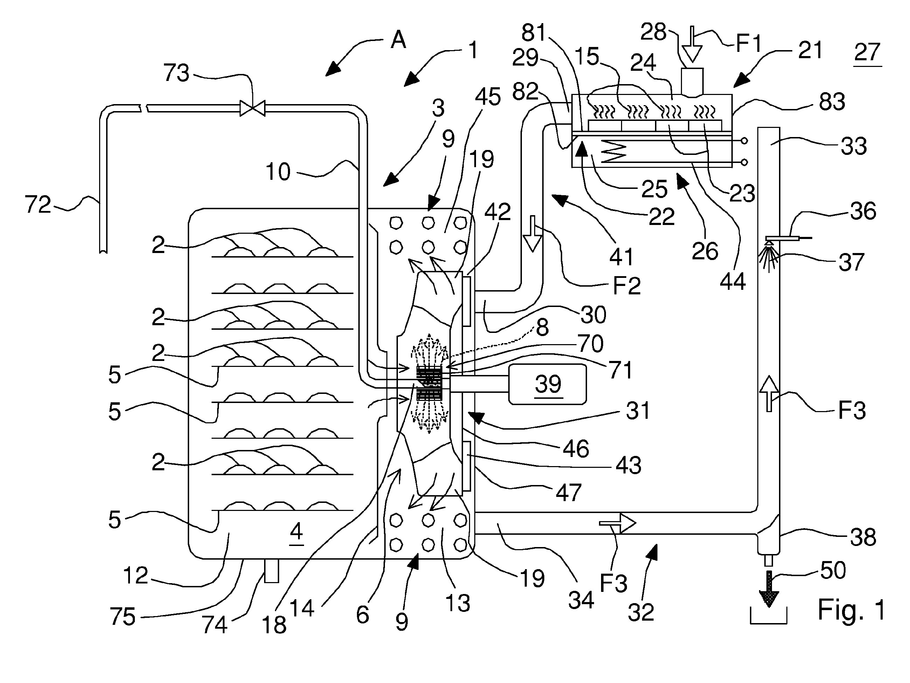

With reference to Figure 1 there is shown a cooking and smoking apparatus 1 for cooking and smoking foodstuffs 2.

The apparatus 1 comprises an oven 3, for example of the combined convection and steam type, provided with a cooking chamber 4 for containing the foodstuffs 2.

The cooking chamber 4 comprises a cooking and smoking zone 12 provided with supporting means 5, such as, for example, shelves, hooks or the like, for supporting the foodstuffs 2.

The cooking chamber 4 further comprises a ventilation zone 13 separated from the cooking and smoking zone 12 by separating means 14.

In the ventilation zone 13 fan means 6 is positioned provided with a plurality of blades 19 for circulating air and/or steam and/or smoking smoke 15, and for cooperating with nebulising means 70 to nebulise water 8, inside the cooking chamber 4.

The nebulising means 70, positioned inside the blades 19, comprises blading 71 and is rotated by the fan means 6.

In particular, the nebulising means 70 is fixed, and is substantially coaxial to a hub, which is not shown, of the fan means 6.

The apparatus 1 comprises a supplying pipe 10 connected to a mains water supply 72 in which the water 8 flows.

The supplying pipe 10 comprises an end 18 inserted inside the blading 71.

The supplying pipe 10 is further provided with valve means 73, for example comprising a solenoid valve, for adjusting a flow of water 8 to the blading 71.

In use, the blading 71, by rotating, nebulises, at least partially, the water 8 dispensed by the supplying pipe 10, and conveys the thus partially nebulised water 8 to the blades 19.

The blades 19, by rotating, further nebulise the water 8 previously partially nebulised by the blading 71.

Subsequently, the thus nebulised water 8 evaporates, turning into steam, owing to the heat yielded by the heating means 9 included in the apparatus 1.

The heating means 9 is positioned inside the cooking chamber 4 in a peripheral portion 45 of the cooking chamber and comprises electrical resistances, or pipes of an exchanger, or the like.

The apparatus 1 further comprises a smoking chamber 21 for producing the smoking smoke 15.

The smoking chamber 21 comprises a frame 83, substantially having a parallelepipedon shape.

Inside the frame 83 there is provided a baffle 22 for separating the smoking chamber 21 into a first space 24 and into a second space 25.

In particular, the baffle 22 comprises a first surface 81 and a second surface 82, opposite the first surface 81, the first surface 81 facing and defining a bottom surface for the first space 24, the second surface 82 facing and defining an upper surface for the second space 25.

The first space 24 is connected to an external environment 27 by an opening 28 and is arranged for receiving combustible elements 23, such as, for example, pieces of wood, of coal or liquid smoke, supported by the first surface 81 of the baffle 22.

The smoking chamber 21 further comprises further heating means 26 for achieving combustion of the combustible elements 23 to obtain the smoking smoke 15.

The further heating means 26 is received in the second space 25 and comprises further electrical resistances 44, or a gas burner, which is not shown, or the like.

In a further embodiment of the invention, which is not shown, the further heating means 26 is received in the second space 25 and fixed to the second surface 82.

In this embodiment, the heating means 26 comprises electrical silkscreen printed or braze welded resistances on the second surface 82, or positive temperature coefficient resistances, or PTC (Positive Temperature Coefficient), fixed to the second surface 82.

The apparatus 1 further comprises a first conduit 41 for connecting the smoking chamber 21 to the cooking chamber 4.

The first conduit 41 comprises a first end 29 leading into the first space 24 and a second end 30 fixed to a wall 47 of the cooking chamber 4 and leading inside the cooking chamber 4 substantially at, and facing a supporting disc 31 of the fan means 6 on which the blades 19 are fixed.

The apparatus 1 further comprises a second conduit 32 that connects the cooking chamber 4 to the external environment 27.

The second conduit 32 comprises a further first end 33 leading into the external environment 27 and a further second end 34 fixed to the wall 47 and leading into the cooking chamber 4 substantially at the ventilation zone 13 at a certain distance from the fan means 6.

Inside the second conduit 32 injecting means 36 is inserted near the further first end 33 to spray and nebulise a jet of water 37 arranged for condensing and/or filtering a mixture of air and/or steam and/or smoking smoke 15 exiting the cooking chamber 4.

The second conduit 32 is further provided with draining means 38 for collecting and discharging condensate 50 formed by the injecting means 36.

The apparatus 1 further comprises a discharge pipe 74 for discharging the water 8 from the cooking chamber 4, fixed to a bottom wall 75 of the cooking chamber 4.

In a first operating condition A, illustrated in Figure 1, the apparatus 1 achieves a cooking/smoking cycle for cooking and smoking the foodstuffs 2.

In particular, in the first operating condition A, a control and management unit, which is not shown, of the apparatus 1, activates the heating means 9, which heats the cooking chamber 4 internally, the further heating means 26, which heats the combustible elements 23 for producing the smoking smoke 15, the fan means 6 and the valve means 73 that control a flow of water 8 to the blading 71.

The fan means 6, rotated by a motor 39, cooperates with the nebulising means 70 to nebulise the water 8 dispensed by the end 18 of the supplying pipe 10, and creates a vacuum in a portion 42 of the cooking chamber 4 adjacent to the second end 30 of the first conduit 41 so as to suck inside the cooking chamber 4 a first mixture of air, coming from the external environment 27 and indicated by a first arrow F1, and of smoking smoke 15, produced in the smoking chamber 21, this first mixture being overall indicated by a second arrow F2.

In order to increase further the aforesaid vacuum, and consequently suck a greater quantity than the first mixture F2, it is possible to increase a rotation speed of the fan means 6 or to provide the fan means 6 with further blades 43 fixed to a side 46, opposite the blades 19, of the supporting disc 31.

In the first operating condition A, further, a second mixture of hot air, smoking smoke 15, and steam, indicated overall by a third arrow F3, can exit the cooking chamber 4 via the second conduit 32 and be condensed by the jet of water 37.

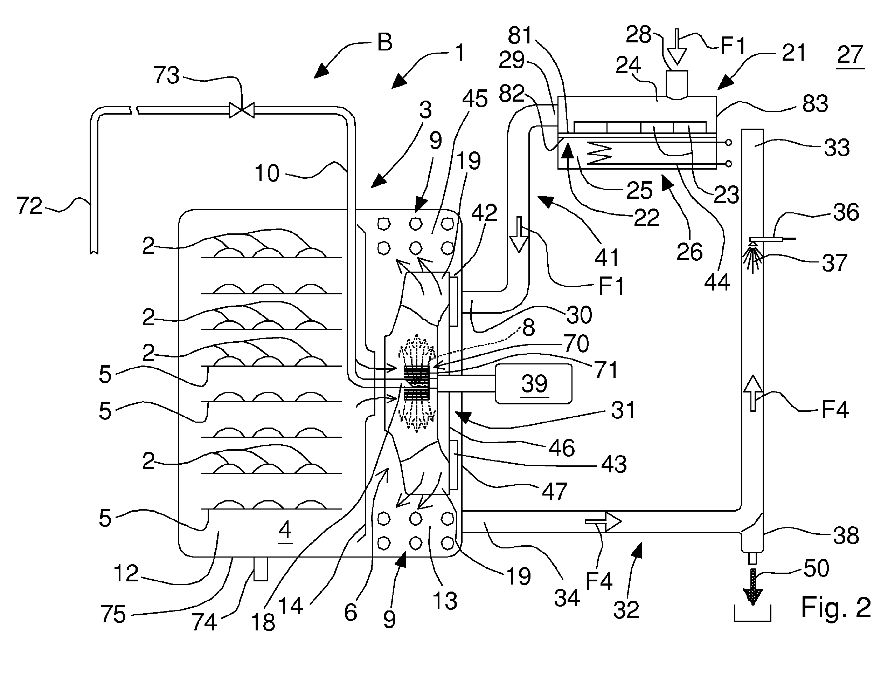

In a second operating condition B, illustrated in Figure 2, the apparatus 1 achieves a cooking cycle, without smoking, for cooking the foodstuffs 2.

In particular, in the second operating condition B, the control and management unit activates the heating means 9, which heats the cooking chamber 4 internally, the fan means 6 and the valve means 73 that control a flow of water 8 to the blading 71, and deactivates the further heating means 26.

The fan means 6, rotated by the motor 39, cooperates with the nebulising means 70 to nebulise the water 8 dispensed by the end 18 of the supplying pipe 10, and creates the aforesaid air vacuum in the portion 42 adjacent to the second end 30 of the first conduit 41 so as to suck only the air F1, coming from the external environment 27, inside the cooking chamber 4.

As disclosed previously, in order to suck a greater quantity of air it is possible to increase the rotation speed of the fan means 6 or provide the fan means 6 with the further blades 43.

In the second operating condition B, moreover, a third mixture of hot air and steam, indicated by a fourth arrow F4, contained in the cooking chamber 4, can exit the cooking chamber 4 by the second conduit 32, be condensed by the jet of water 37 and be discharged by the draining means 38.

It should be noted how the apparatus 1 is particularly flexible, i.e. enables cooking/smoking cycles to alternate with solely cooking cycles.

It should be further noted how the apparatus 1 has a simple structure and is cheap to make.

Also, it should be noted how the apparatus 1 is not provided with the vibrating device included in known apparatuses, which on the one hand enables a further quantity of money to be saved and on the other hand enables a particularly silent apparatus 1 to be obtained.

Also, it should be noted how the smoking chamber 21 is particularly flexible.

In fact, the smoking chamber 21 is associable with, and saleable separately from, any cooking apparatus provided with a conduit for the entry of air from the external environment 27.

In such a case it is in fact sufficient to connect the smoking chamber 21 to the aforesaid conduit to obtain a cooking and smoking apparatus rapidly and cheaply.

## Claims

1. Cooking and smoking apparatus for cooking and smoking foodstuffs (2) comprising cooking chamber means (4) for containing said foodstuffs (2) and heating means (9), positioned in said cooking chamber means (4), for heating said foodstuffs (2), **characterised in that** there is provided smoking chamber means (21) for producing smoking smoke (15) for smoking said foodstuffs (2) and conduit means (41) for connecting said cooking chamber means (4) to said smoking chamber means (21).

2. Apparatus according to claim 1, wherein said heating means (9) comprises an electrical resistance.

3. Apparatus according to claim 1, wherein said heating means (9) comprises a plurality of pipes of a heat exchanger.

4. Apparatus according to any preceding claim, wherein said smoking chamber means (21) comprises separating means (22) for separating said cooking chamber means (21) into a first space (24) and into a second space (25).

5. Apparatus according to claim 4, wherein said separating means (22) comprises a first surface (81) facing said first space (24) for supporting combustible elements (23) from the combustion of which there is obtained said smoking smoke (15).

6. Apparatus according to claim 5, wherein said separating means (22) comprises a second surface (82), opposite said first surface (81), and facing said second space (25).

7. Apparatus according to any one of claims 4 to 6, wherein said separating means comprises a baffle (22).

8. Apparatus according to any one of claims 5 to 7, wherein said smoking chamber means (21) comprises further heating means (26) for heating said combustible elements (23).

9. Apparatus according to claim 8, wherein said further heating means (26) is received in said second space (25).

10. Apparatus according to claim 8, or 9, as claim 8 is appended to claim 6, wherein said further heating means is supported by said second surface (82).

11. Apparatus according to any one of claims 8 to 10, wherein said further heating means (26) comprises a further electrical resistance (44).

12. Apparatus according to any one of claims 8 to 10, wherein said further heating means (26) comprises a gas burner.

13. Apparatus according to any one of claims 8 to 10, wherein said further heating means (26) comprises a positive temperature coefficient resistance (PTC).

14. Apparatus according to any one of claims 4 to 13, wherein said first space (24) comprises an opening (28) communicating with an external environment (27).

15. Apparatus according to claim 14, and comprising fan means (6) received in said cooking chamber means (4) for circulating in said cooking chamber means (4) air and/or steam and/or said smoking smoke (15) to bring to said cooking chamber means (4) air coming from said external environment (27) and/or said smoking smoke (15) produced in said smoking chamber means (21).

16. Apparatus according to claim 15, wherein said fan means (6) comprises a supporting disc (31) supporting a plurality of blades (19).

17. Apparatus according to claim 16, wherein said fan means (6) comprises further blades (43) fixed to a side (46) of said supporting disc (31) opposite said blades (19).

18. Apparatus according to any one of claims 4 to 17, wherein said conduit means comprises a first conduit (41) provided with a first end (29) leading into said first space (24).

19. Apparatus according to claim 18, as claim 18 is appended to any one of claims 15 to 17, wherein said first conduit (41) comprises a second end (30) fixed to a wall (47) of said cooking chamber means (4) and leading inside said cooking chamber means (4) substantially at said fan means (6).

20. Apparatus according to claim 19, as claim 20 is appended to claim 16, wherein said second end (30) substantially faces said supporting disc (31).

21. Apparatus according to claim 19, as claim 14 is appended to claim 17, wherein said second end (30) substantially faces said further blades (43).

22. Apparatus according to any one of claims 14 to 21, as claim 18 is appended to claim 14, and comprising further conduit means (32) for connecting said cooking chamber means (4) to said external environment (27).

23. Apparatus according to claim 22, as claim 22 is appended to claim 19, wherein said further conduit means comprises a second conduit (32) provided with an end (34) fixed to said wall (47) and leading into said cooking chamber means (4) at a certain distance from said fan means (6).

24. Apparatus according to claim 22, or 23, and comprising injecting means (36) positioned in said further conduit means (32) for spraying a jet of cooling liquid (37) inside said further conduit means (32) for condensing and/or filtering a mixture (F3; F4) of air and/or steam and/or smoking smoke (15) exiting said cooking chamber means (4).

25. Apparatus according to claim 24, and comprising draining means (38) associated with said further conduit means (32) for collecting and discharging condensate (50) formed by said mixture (F3; F4).

26. Apparatus according to any preceding claim comprising supplying means (10) for introducing into said cooking chamber means (4) water (8) to be vaporised.

27. Apparatus according to claim 26, as claim 26 is appended to claim 15, and comprising nebulising means (70) associated with and cooperating with said fan means (6), to nebulise said water (8).
